Europäisches Patentamt

European Patent Office

Office européen des brevets

(11) Numéro de publication: **0 296 061**

**A1**

# DEMANDE DE BREVET EUROPEEN

(21) Numéro de dépôt: **88401483.8**

(22) Date de dépôt: **15.06.88**

(51) Int. Cl.⁴: **B 62 D 43/00**

(30) Priorité: **17.06.87 FR 8708446**

(43) Date de publication de la demande:
**21.12.88 Bulletin 88/51**

(84) Etats contractants désignés:
**BE DE ES GB IT NL**

(71) Demandeur: **TRAILOR S.A.**
**3 route nationale 10 "Le Gibet" Coignières**
**F-78311 Maurepas Cedex (FR)**

**FRUEHAUF-FRANCE S.A.**
**2 avenue de l'Aunette**
**F-91130 Ris Orangis (FR)**

(72) Inventeur: **Maurel, Christian René**
**6 Allée des Tourterelles**
**F-54300 Luneville (FR)**

(74) Mandataire: **Barnay, André François**
**Cabinet Barnay 80 rue Saint-Lazare**
**F-75009 Paris (FR)**

(54) Dispositif de logement, de manutention et de transport d'une roue de secours de véhicule industriel.

(57) Dans un véhicule à hayon relevable coulissant et escamotable sous le plateau du véhicule et formé d'une moitié avant (6)
et d'une moitié arrière (11) repliable automatiquement sur la
première, il est prévu en combinaison avec le hayon : un
logement de roue de secours formé d'une partie avant (12)
fixée sous le plateau (2) et d'une partie arrière (13) mobile
comportant des moyens (18) de verrouillage à deux positions
sollicités dans une première position de verrouillage desdites
parties (12, 13) ensemble et adaptés pour passer dans une
seconde position de verrouillage de ladite partie arrière (13) sur
la moitié arrière (11) du hayon escamoté, sous l'action de cette
moitié (11), et des moyens (D7, D8) pour commander
sélectivement le hayon, ladite partie arrière (13) constituant un
chariot de manutention pour la roue de secours (25).

FIG. 4

EP 0 296 061 A1

**Description**

**Dispositif de logement, de manutention et de transport d'une roue de secours de véhicule industriel.**

La présente invention concerne d'une façon générale les véhicules industriels du type comportant un hayon relevable de chargement, utilisés pour le transport de marchandises et elle est plus particulièrement relative aux véhicules de ce type dont le hayon relevable est formé de deux parties articulées entre elles suivant un axe transversal à celui du véhicule.

Les véhicules de ce type sont bien connus et largement répandus. En position de route la moitié arrière du hayon est rabattue par-dessus la moitié avant et le hayon ainsi replié est déplacé vers l'avant du véhicule en coulissant sur des guides situés sous le plateau et est logé sous celui-ci, en retrait de son bord arrière.

Suivant le tonnage du véhicule, ses roues peuvent atteindre un poids considérable, tel qu'un homme seul ne peut les soulever et les manipuler en cas de crevaison d'un pneumatique et doit par conséquent faire appel à un service de dépannage disposant de moyens appropriés. Il en résulte des frais importants dus à cette intervention et à l'immobilisation du véhicule.

Le but de l'invention est de remédier à cet inconvénient en réalisant un dispositif permettant au conducteur de sortir lui-même la roue de secours, de l'amener à poste et de ramener la roue usagée à la place de la roue de secours, en position de route, en utilisant le hayon élévateur pour une partie de ces opérations.

L'invention a pour objet à cet effet un dispositif de logement, de blocage, de manutention et de transport d'une roue de secours pour véhicule industriel de transport de merchandise du type comportant un hayon articulé relevable monté coulissant sur des rails longitudinaux parallèles et escamotable sous le plateau du véhicule et formé d'une moitié avant et d'une moitié arrière repliable par-dessus la première, caractérisé en ce qu'il comprend en combinaison avec le hayon : un logement de roue de secours formé d'une partie avant fixée sous le plateau et d'une partie arrière mobile comportant des moyens de verrouillage à deux positions sollicités dans une première position de verrouillage desdites parties ensemble et adaptés pour passer dans une seconde position de verrouillage de ladite partie arrière sur la moitié arrière du hayon escamoté, sous l'action de cette moitié, et des moyens pour commander sélectivement la hayon.

Suivant une autre caractéristique de l'invention, ladite partie arrière du logement de la roue de secours constitue un chariot de manutention pour celle-ci.

La description qui va suivre, en regard des dessins annexés à titre d'exemples non limitatifs, fera bien comprendre comment l'invention peut être mise en pratique.

La figure 1 est une vue schématique partielle en élévation latérale et en coupe de l'arrière d'un camion montrant un agencement connu de hayon relevable et repliable, en position déployée de travail.

La figure 2 est une vue analogue montrant l'agencement du dispositif de logement de manutention et de transport de roue de secours suivant l'invention pour un véhicule industriel à hayon élévateur repliable en position repliée et escamotée.

La figure 3 est un schéma de fonctionnement du dispositif suivant l'invention.

La figure 4 est une vue à plus grande échelle montrant le détail du dispositif.

La figure 5 montre la roue de secours en position finale de présentation par le hayon.

La figure 6 est une vue de détail de l'agencement de la partie arrière du logement de la roue de secours, qui forme chariot.

La figure 7 est une vue partielle de face de la partie arrière formant chariot, dans le sens de la flèche 7 de la figure 5.

La figure 8 est un schéma du circuit de fluide sous pression commandant automatiquement le blocage et le déblocage de la roue de secours dans son logement.

La figure 9 est un schéma du circuit de fluide sous pression pour la commande générale du dispositif suivant l'invention.

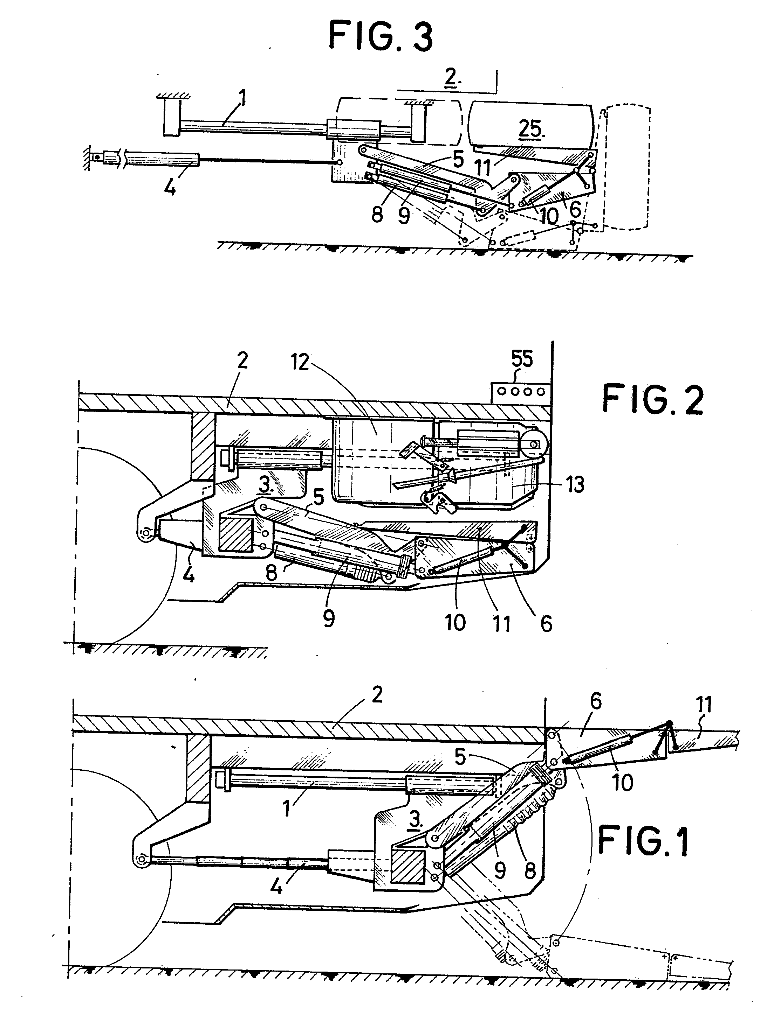

En se référant à la figure 1, un camion à hayon élévateur repliable en deux parties comprend, comme connu en soi, un système de coulisse à deux rails 1 parallèles entre eux et à l'axe longitudinal du camion et de part et d'autre de cet axe, fixés sous la partie arrière du plateau 2.

Un chariot 3 est monté coulissant sur les rails 1 le long desquels il se déplace sous l'action d'un vérin télescopique 4.

Un bras 5 est articulé par une extrémité sur le chariot 3 et la moitié avant 6 du hayon repliable est articulée sur l'extrémité opposée du bras 5.

Un premier vérin 8 est articulé par une extrémité sur le chariot 3 et s'étend à peu près le long du bras 5, avec son extrémité opposée articulée sur un talon de celui-ci au voisinage de son extrémité opposée au chariot 3.

Un second vérin 9 est également articulé par une extrémité sur le chariot 3, tandis que son extrémité opposée est articulée sur la moitié avant 6 du hayon.

Un troisième vérin 10 est articulé sur la moitié avant 6 du hayon et est relié au moyen de biellettes à la moitié arrière 11 du hayon.

L'agencement est tel que l'actionnement du vérin 10 provoque le repliage de la moitié arrière 11 du hayon sur sa moitié avant 6, ou le mouvement contraire, tandis que l'actionnement des vérins 8 et 9 provoque la montée et la descente du hayon et que l'actionnement du vérin 4 permet de faire sortir ou rentrer le hayon, replié, sous le plateau 2 du véhicule.

Suivant l'invention, il est prévu un logement pour la roue de secours du véhicule, entre les rails 1 du chariot

2

3.

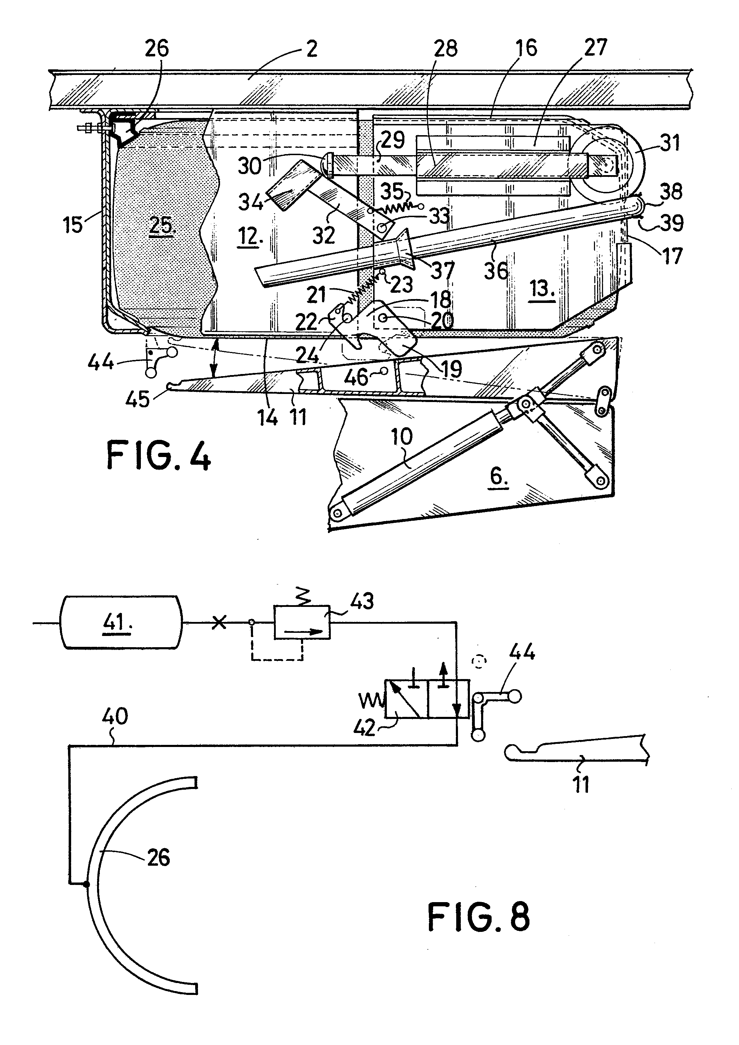

Comme représenté aux figures 2 et 4, le logement de la roue de secours est formé de deux parties : une partie avant constituée par une demi-coquille semi-cylindrique 12 fixée sous le plateau 2 entre les rails 1 avec sa partie diamétrale ouverte dirigée vers l'arrière, et une partie arrière constituée par une demi-coquille mobile semi-cylindrique 13.

La demi-coquille semi-cylindrique avant 12 a une paroi inférieure fermée 14, une paroi latérale semi-circulaire 15 et un côté supérieur ouvert situé contre la face inférieure du plateau 2.

La partie arrière, ou demi-coquille mobile 13, a une paroi supérieure fermée 16 et un côté inférieur ouvert vers le bas, et une paroi latérale semi-circulaire 17 vers l'arrière.

La partie arrière 13 est fixée sur la partie avant 12 au moyen d'un organe de verrouillage basculant 18 ayant dans son ensemble une forme en T dont la barre horizontale forme un crochet à chaque extrémité et dont la barre verticale comporte un appendice 19 s'étendant à angle droit et formant came.

Cet organe de verrouillage 18 est monté sur la partie arrière 13 au moyen d'un pivot 20 situé à peu près à l'intersection de la barre verticale du T avec l'appendice 19. De plus, l'organe de verrouillage 18 est sollicité élastiquement dans une première position, de verrouillage, au moyen d'un ressort de traction 21 relié par une extrémité à l'une des extrémités 22 de la barre horizontale et, par son autre extrémité, en un point fixe 23 de la partie arrière 13, l'agencement étant tel que, dans cette position imposée par le ressort 21, le crochet formé par l'extrémité 22 de l'organe de verrouillage 18 est en prise avec un axe de verrouillage 24 solidaire de la partie avant 12, l'appendice 19 faisant alors saillie vers le bas, au delà de la paroi inférieure 14 de la partie avant.

Dans cette position de verrouillage de l'organe basculant 18, la partie arrière 13 du logement est verrouillée avec la partie avant 12.

Une roue de secours 25, disposée dans le logement ainsi formé par les deux demi-coquilles avant et arrière 12, 13, est engagée pour moitié dans la demi-coquille avant 12 dont elle est empêchée de sortir vers l'arrière par la paroi latérale 17, formant butée, de la demi-coquille arrière 13.

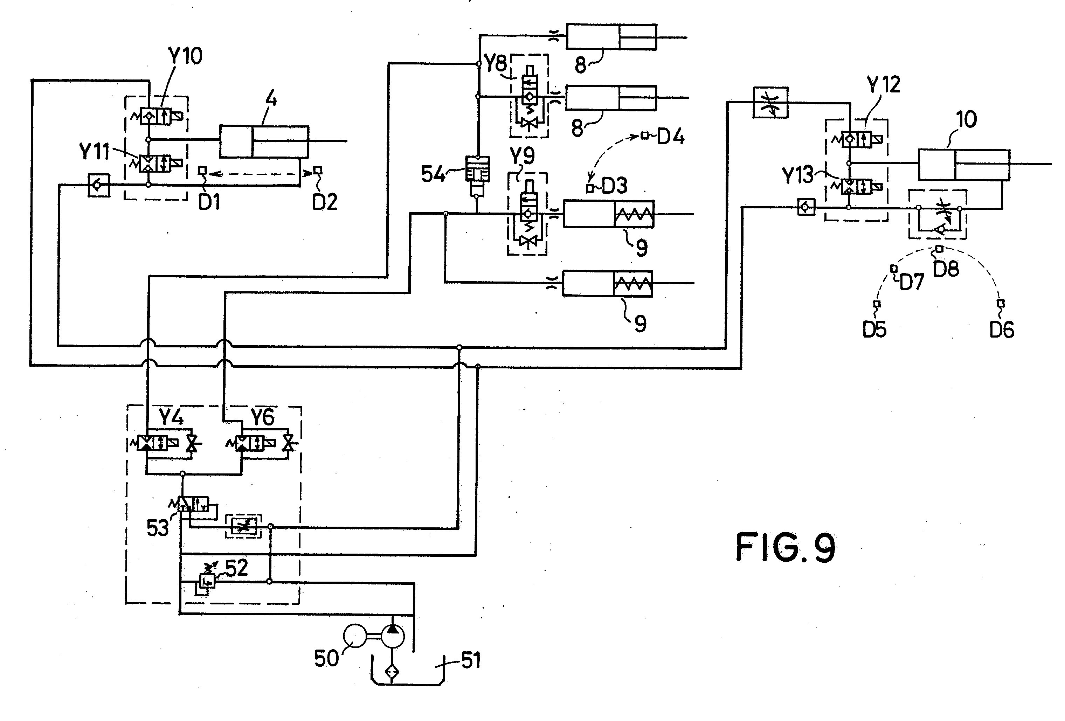

La roue 25 est bloquée dans le logement au moyen d'un dispositif de blocage, par exemple un joint gonflable 26 ayant en section une forme appropriée complémentaire d'un épaulement du pneumatique et de forme semi-circulaire (comme représenté schématiquement en plan à la figure 8) et fixé dans l'angle semi-circulaire supérieur de la demi-coquille avant 12 (figure 4); ce joint peut être gonflé et dégonflé automatiquement comme on le décrira dans la suite.

La demi-coquille, ou partie arrière 13, du logement de la roue 25 comporte au voisinage de se paroi 16 deux ferrures latérales 27 fixées sur la paroi latérale 17 de la demi-coquille arrière 13 et adaptées pour porter chacune un tube cylindrique 28 dans une position à peu près tangente à la demi-coquille et dans chacun de ces tubes est montée librement coulissante une barre 29 présentant une tête élargie 30 à son extrémité voisine de l'ouverture diamétrale de la demi-coquille 13 et une roue 31 à son extrémité opposée, dirigée vers l'arrière.

Il est enfin prévu de chaque côté sur la demi-coquille 13, un levier 32 articulé par une extrémité sur un axe 33 solidaire de la demi-coquille au voisinage de son ouverture diamétrale, à peu près à la moitié de la largeur de la paroi latérale 17, s'étendant obliquement au-dessus de la tête 30 de la barre 29, et comportant à son extrémité opposée une douille 34 formant avec le levier 32 un angle un peu supérieur à 90°.

Le bras 32 est sollicité en contact avec la tête 30 de la barre 29 au moyen d'un ressort 35.

Pour empêcher les barres 29 de coulisser dans les tubes 28 et les roues 31 de faire saillie, il est prévu un arceau 36 en U dont les branches parallèles sont engagées dans deux supports latéraux 37 fixés sur la paroi latérale 17 dans une position oblique telle que la partie intermédiaire 38 de cet arceau bloque les roues 31, cette partie intermédiaire 38 étant retenue dans une pince élastique 39 sur la paroi latérale 17; cet arceau, ainsi monté amovible, a également une autre fonction, comme on le verra dans la suite.

La figure 8 montre le schéma du circuit pneumatique pour le gonflage automatique du joint 26 de blocage de la roue 25 dans son logement.

Ce circuit comprend un conduit 40 relié au joint 26 et à un réservoir d'air comprimé 41 du véhicule, par l'intermédiaire d'un distributeur 42 et d'un régulateur de pression 43, le distributeur 42 étant commandé par un levier coudé 44 en L articulé au voisinage de la partie avant 15 de la demi-coquille 12, au-dessous de celle-ci et devant l'extrémité de la moitié arrière 11 du hayon, dans la position repliée et escamotée de celui-ci (figure 4).

Le fonctionnement du dispositif suivant l'invention est le suivant, en considérant comme point de départ la position repliée et escamoté du hayon, avec la roue de secours bloquée dans son logement, dont les deux demi-coquilles sont verrouillées ensemble, par le joint 26 gonflé.

Dans cette position, représentée à la figure 4, la moitié arrière 11 du hayon est disposée espacée au-dessous du logement formé par les deux demi-coquille 12, 13, l'appendice 19 de l'organe de verrouillage 18 fait saillie au-dessous du logement et l'une des branches du levier coudé 44 est située en face de l'extrémité de la moitié 11 du hayon.

Au moyen du dispositif de commande hydraulique du hayon, modifié de façon appropriée, comme on le décrira dans la suite, on actionne le vérin 10 afin de relever légèrement la moitié arrière 11 du hayon par rapport à la moitié avant 6, sans déplacer le chariot 3 le long des rails 1.

Dans ce mouvement, l'extrémité 45 de la moitié 11 du hayon rencontre l'une des extrémités du levier coudé 44 et le fait tourner autour de son axe d'articulation, mettant ainsi le distributeur 42 à l'échappement pour dégonfler le joint 26.

Simultanément, une partie intermédiaire de la moitié 11 du hayon est entrée en contact avec l'appendice 19 de l'organe de verrouillage 18, faisant tourner celui-ci autour de son axe 20 à l'encontre de la force du ressort 21 et amenant le second crochet de la barre transversale de l'organe de verrouillage en prise avec un axe de verrouillage 46 solidaire de la moitié arrière 11 du hayon et verrouillant ainsi la seconde demi-coquille 13 sur cette moitié 11.

Dans son mouvement de relevage, la moitié 11 du hayon soulève légèrement la demi-coquille arrière 13 et la roue 25, dégageant ainsi celle-ci de la demi-coquille avant 12.

On actionne alors le vérin télescopique 4 pour faire reculer le chariot 3 le long des rails 1 jusque dans la position normale de déploiement du hayon, dans laquelle la roue de secours logée dans la demi-coquille 13, en position horizontale, se trouve dégagée du bord arrière du plateau (figure 3) et immobilisée dans cette position.

L'opérateur retire alors l'arceau 36 en le saisissant par sa partie intermédiaire 38 et en le dégageant de la pince élastique 39, la demi-coquille 13 étant accrochée et suspendue à la moitié 11 du hayon par les organes 18.

On actionne alors de nouveau la commande hydraulique du vérin 10 et celle des vérins 8 et 9 d'une part pour poser la moitié avant 6 du hayon sur le sol et d'autre part pour amener la moitié arrière 11 en position verticale comme représenté à la figure 3 et l'immobiliser dans cette position.

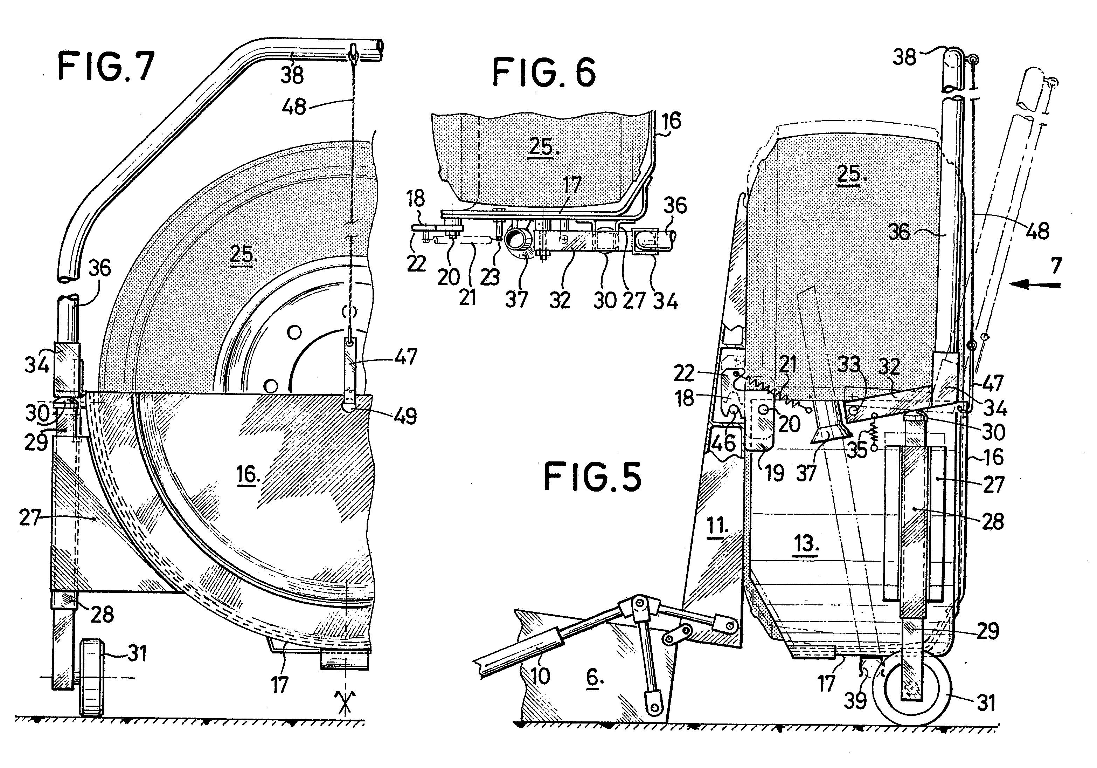

L'opérateur introduit alors manuellement les branches de l'arceau 36 dans les douilles 34 des leviers 32, comme représenté à la figure 5, et accroche alors un crochet 47, relié par un câble 48 à la partie intermédiaire 38 de l'arceau, dans un trou 49 au milieu du bord de la paroi 16 de la demi-coquille 13 (figure 7).

En utilisant l'arceau comme un levier en le tirant vers lui, l'opérateur exerce une pression sur les têtes 30 des barres 29 par l'intermédiaire des leviers 32, et soulève par réaction des roues 31 sur le sol l'ensemble de la demi-coquille 13 dont les tubes 28 coulissent sur les barres 29.

Les organes de verrouillage 18 sont alors libérés des axes de verrouillage 46 et sont rappelés par les ressorts 21 dans leur position initiale, libérant ainsi l'ensemble de la demi-coquille 13 du hayon.

Cet ensemble peut alors être utilisé par l'opérateur à la façon d'un diable pour amener la roue de secours 25 à l'endroit voulu pour la décharger.

On comprend bien entendu qu'une fois la demi-coquille libérée de la roue 25, l'ensemble peut être utilisé de nouveau avec une roue remplacée par la roue de secours, pour la placer dans le logement, en effectuant les manoeuvres inverses.

On a représenté à la figure 9 le circuit hydraulique de commande du dispositif suivant l'invention.

Ce circuit comprend une source de fluide sous pression 50 et une bâche 51 avec un limiteur de pression 52 dans un circuit de retour à la bâche, et une vanne à tiroir, automatique, 53 de pilotage par pression.

La vanne automatique de pilotage 53 est reliée d'une part en amont par rapport à la source 50, à un circuit alimentant un premier groupe d'électrovannes Y10, Y11, de commande du vérin télescopique 4 de translation du chariot 3 et un second groupe d'électrovannes Y12, Y13, de commande du vérin 10 de déploiement de la moitié arrière 11 du hayon.

D'autre part, en aval par rapport à la source 50, la vanne de pilotage automatique est reliée à un troisième groupe d'électrovannes Y4, Y6, qui sont reliées respectivement à une électrovanne Y8 du circuit des vérins 8 de levage du hayon et à une électrovanne Y9 du circuit des vérins 9 de stabilisation et d'orientation du hayon, le circuit des vérins 8 étant relié à celui des vérins 9 par un multiplicateur de pression 54.

Les électrovannes Y8, Y9, Y10 et Y12 sont du type à clapet étanche et les électrovannes Y4, Y6, Y11 et Y13 sont du type à double clapet étanche.

Ces électrovannes sont commandées par des détecteurs constitués par des micro-contacts D1, D2 de position du chariot 3, D3, D4 de position de l'ensemble du hayon et D5, D6, D7 et D8 des positions de la moitié arrière 11 du hayon.

En ce qui concerne l'actionnement de la partie classique du système, c'est-à-dire la translation du chariot 3, le déploiement du hayon et ses mouvements de montée et de descente, le fonctionnement de ce circuit apparaîtra facilement compréhensible aux techniciens.

En ce qui concerne plus particulièrement la séquence des phases du cycle de fonctionnement du dispositif suivant l'invention, c'est-à-dire le soulèvement et la saisie de la roue de secours, sa sortie et sa présentation au moyen de la moitié arrière 11 du hayon, à partir de la position "Route" représentée à la figure 2, les différentes phases de ce cycle ressortiront clairement du tableau suivant :

| Phases | Action des détecteurs | Ordre |
|---|---|---|

1)
   Saisie de la demi-coquille. Soulèvement de la moitié arrière 11 du hayon. Décrochage/accrochage demi-coquille

$\longrightarrow$ D1 $\longrightarrow$ Bras horizontaux (5,8,9)
$\rightarrow$ D3 $\longrightarrow$ Groupe Y4
$\hookrightarrow$ D4 $\longrightarrow$ Y8 Y9 Y4
$\longrightarrow$ Groupe Y12

2)
   Translation du chariot 3. Sortie roue 25 en position horizontale

D7 $\longrightarrow$ Coupure groupe Y12
$\longrightarrow$ Groupe Y11

3)
   Descente ensemble hayon toujours replié.

D2 $\longrightarrow$ Coupure groupe Y11
$\longrightarrow$ Y8 Y9 Y4

4)
   Déploiement moitié arrière 11 du hayon. Présentation de la roue 25 en position verticale.

D4 $\longrightarrow$ Coupure Y8 Y9 Y4
$\longrightarrow$ Groupe Y12

5)
   Arrêt. Fin de cycle.

D8 $\longrightarrow$ Coupure groupe Y12

On comprend bien entendu qu'un boîtier ou tableau de commande 55 peut être prévu au voisinage de l'extrémité arrière de la caisse du véhicule, comportant des leviers, ou autres, de commande manuelle et/ou des contacts électriques de commande d'un système entièrement automatisé grâce à des moyens connus appropriés ne faisant pas partie de l'invention.

Il ressort de ce qui précède que l'invention fournit un dispositif simple et commode pour le logement et la manutention d'une roue de secours d'un véhicule de transport de marchandises, du type à hayon relevable articulé en deux parties.

**Revendications**

1. Dispositif de logement, de manutention et de transport d'une roue de secours pour véhicule industriel de transport de marchandises du type comportant un hayon articulé relevable monté coulissant sur des rails longitudinaux parallèles, et escamotable sous le plateau du véhicule et formé d'une moitié avant (6) et d'une moitié arrière (11) repliable par-dessus la première, caractérisé en ce qu'il comprend en combinaison avec le hayon (6, 11) des moyens (12, 13) de logement de la roue de secours (25) et de verrouillage de celle-ci en position de route, des moyens pour transférer et fixer ladite roue de secours sur le hayon (6, 11), des moyens pour manoeuvrer l'ensemble constitué par la roue de secours fixée sur le hayon et la présenter en position verticale hors du plateau, lesdits moyens pour loger la roue de secours comportant une partie adaptée pour constituer un chariot de transport de ladite roue.

2. Dispositif suivant la revendication 1, caractérisé en ce que ledit logement de roue de secours est formé d'une partie avant (12) fixée sous le plateau (2) et d'une partie arrière (13) mobile comportant des moyens (18) de verrouillage à deux positions sollicités dans une première position de verrouillage desdites parties (12, 13) ensemble et adaptés pour passer dans une seconde position de verrouillage de ladite partie arrière (13) sur la moitié arrière (11) du hayon escamoté, sous l'action de cette moitié (11), et lesdits moyens de transfert (D7, D8) étant adaptés pour commander sélectivement le hayon.

3. Dispositif suivant la revendication 2, caractérisé en ce que ladite partie avant du logement est une demi-coquille semi-cylindrique (12) fixée sous le plateau (2) entre lesdits rails (1) et ladite partie arrière du logement est une demi-coquille semi-cylindrique (13) ayant une paroi supérieure (16).

4. Dispositif suivant la revendication 3, caractérisé en ce que lesdits moyens de verrouillage sont constitués par un organe (18) monté basculant sur la paroi latérale de la demi-coquille arrière (13) de chaque côté de son ouverture, comportant deux crochets opposés et un appendice (19), et sollicité élastiquement dans une première position dans laquelle l'un desdits crochets est en prise avec un axe de verrouillage (24) de la demi-coquille avant (12) et ledit appendice fait saillie au-dessous dudit logement en face de la moitié arrière (11) du hayon, dans la position repliée et escamotée de celui-ci.

5. Dispositif suivant la revendication 4, caractérisé en ce que lesdits moyens pour commander sélectivement le hayon sont adaptés pour relever légèrement dans une première phase ladite moitié arrière (11) et l'amener en contact avec ledit appendice (19) de l'organe de verrouillage (18) et le faire basculer dans une seconde position dans laquelle ledit second crochet vient en prise avec un organe (46) solidaire de ladite moitié (11) et, dans une seconde phase pour faire coulisser l'ensemble du hayon, avec ladite demi-coquille (13) portant la roue de secours (25) et enfin, dans une troisième phase, relever verticalement la moitié arrière (11) tandis que la moitié avant (6) du hayon est abaissée sur le sol.

6. Dispositif suivant la revendication 4, caractérisé en ce que la demi-coquille arrière (13) comporte des moyens de roulement (29, 31) montés tangentiellement de part et d'autre de la partie arrière (13) et de façon coulissante.

7. Dispositif suivant la revendication 6, caractérisé en ce que lesdits moyens de roulement comprennent deux barres (29) montées coulissantes dans deux tubes (28) fixés sur la partie arrière (13) au moyen de ferrures (27), chacune desdites barres portant à une extrémité une roue(31) et coopérant par son autre extrémité (30)avec un levier (32) articulé par une extrémité sur ladite partie (13).

8. Dispositif suivant la revendication 7, caractérisé en ce que le levier (32) comporte à son extrémité opposée des moyens (34) aptes à recevoir une extrémité d'une branche d'un arceau (36) monté de façon amovible sur ladite partie arrière (13).

9. Dispositif suivant la revendication 8, caractérisé en ce que ledit arceau (36) est maintenu sur la partie arrière (13) par ses branches, engagées chacune dans un organe de retenue (37) fixé latéralement sur ladite partie, et par sa partie intermédiaire (38) engagée dans une pince élastique (39) de manière que ladite partie intermédiaire (38) forme une butée retenant lesdites roues (31).

10. Dispositif suivant la revendication 2, caractérisé en ce qu'il comprend un dispositif de blocage, constitué par exemple par un joint gonflable (26) de forme semi-circulaire fixé dans la partie avant (12) du logement et adapté pour bloquer la roue de secours (25) dans le logement, lorsqu'il est gonflé, ce joint (26) étant relié à une source d'air comprimé du véhicule.

11. Dispositif suivant la revendication 10, caractérisé en ce qu'il comprend des moyens (44) coopérant avec la moitié arrière (11) du hayon pour commander le gonflage et le dégonflage dudit joint (26).

12. Dispositif suivant l'une quelconque des revendications 1 à 11, caractérisé en ce que le système hydraulique d'actionnement du hayon comprend des moyens (D5...D8) pour commander le mouvement de relevage de la moitié arrière (11) du hayon, dans la position repliée et escamotée de celui-ci, pour amener ladite moitié en prise avec la partie arrière (13) du logement de la roue, et l'arrêter dans cette position.

13. Dispositif suivant la revendication 12, caractérisé en ce que lesdits moyens sont constitués par des contacts électriques (D7, D8) reliés à des électrovannes dudit système hydraulique.

14. Dispositif suivant la revendication 12, caractérisé en ce que ledit système d'actionnement est commandé par un dispositif électronique d'automatisation.

# FIG. 3

# FIG. 2

# FIG. 1

FIG.4

FIG.8

0296061

FIG.7     FIG.6     FIG.5

0296061

**FIG.9**

Office européen
des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 114 147  (LIEBERMANN)<br>* Revendication 1; figures 1-6 *<br>--- | 1 | B 62 D  43/00 |
| A | DE-A-3 118 504  (WEIHER)<br>* Revendication 1; figure 5 *<br>--- | 1 | |
| A | NL-A-7 806 390  (D'HOLLANDER)<br>* Revendication 1; figures 2-5 *<br>----- | 1 | |

|  |  |  | DOMAINES TECHNIQUES RECHERCHES (Int. Cl.4) |
|---|---|---|---|
|  |  |  | B 62 D<br>B 60 P |

Le présent rapport a été établi pour toutes les revendications

| Lieu de la recherche | Date d'achèvement de la recherche | Examinateur |
|---|---|---|
| LA HAYE | 09-09-1988 | SCHMITTER J.M. |